# DEMANDE DE BREVET EUROPEEN

(11) **EP 4 199 548 A1**
(43) Date de publication de la demande: **21.06.2023**
(21) Numéro de dépôt: 22213611.1
(22) Date de dépôt: 14.12.2022
(51) Int. Cl.: H04W 4/02, H04W 12/04, H04W 12/06

(54) **BALISE IOT SECURISEE DANS UN SYSTEME DE LOCALISATION ET D'ECHANGE DE DONNEES**

(30) Priorité: 16.12.2021 FR 2113689
(71) Demandeur: THALES, 92400 Courbevoie (FR)
(72) Inventeur: BILLOT, Benoit, 92622 GENNEVILLIERS Cedex (FR); NUNES PINTO DE SOUSA, David, 92622 GENNEVILLIERS Cedex (FR); VOILLEQUIN, Cyril, 92622 GENNEVILLIERS Cedex (FR); BERHAULT, Aurélien, 92622 GENNEVILLIERS Cedex (FR)
(74) Mandataire: Atout PI Laplace

(57) **Abrégé**

L'invention concerne une balise sécurisée (200), pour un système de localisation et d'échange de données comprenant au moins un noeud (110, 111, 112), une balise (120, 121, 122) configurée pour détecter la présence et acquérir des données des noeuds, et une passerelle (130, 131, 132) configurée pour retransmettre à un équipement de supervision (101) les données récupérées par les balises. Elle comprend :
- un moyen de communications (201) configuré pour communiquer avec les noeuds par un lien de communications courte-portée,
- un moyen de communications (202) configuré pour communiquer avec les passerelles par un lien de communications de type Low Power - Wide Area Network.

Elle comprend également des moyens de calcul (210) implémentant des fonctions de cryptage, d'authentification, d'intégrité et d'unicité des trames échangées avec le ou les noeuds.

L'invention porte également sur le noeud sécurisé correspondantt et un système de localisation sécurisé complet.

## Description

### Domaine technique :

L'invention se situe dans le domaine des systèmes radio permettant de connaître, depuis un équipement centralisé de supervision, la position de noeuds dans des environnements complexes et contraints, les noeuds étant des émetteurs/récepteurs de taille réduite associés respectivement à une personne ou un objet, ainsi que l'échange de données entre l'équipement de supervision et les noeuds. Elle porte plus particulièrement sur une passerelle possédant des fonctionnalités permettant de sécuriser les transmissions dans un tel système.

### Technique antérieure :

Suivre le déplacement de noeuds de communication mobiles dans un environnement donné peut avoir un intérêt particulier : sur un site industriel, dans un bâtiment comprenant des zones à accès restreint, dans un hôpital, un navire, etc..., les données de localisation permettent de surveiller les allées-venues, de contrôler les flux de personnes, de vérifier les autorisations d'accès, de localiser du matériel ou des personnes isolées afin, par exemple, d'en assurer la sécurité en cas d'incident, ou encore d'enregistrer et de rejouer les positions passées pour analyse.

Par la suite, on désignera sous le nom de noeud les personnes ou équipements dont la position est recherchée, les noeuds étant en capacité d'échanger des données avec le système de supervision.

La méthode de localisation la plus répandue est la localisation par satellite. Les noeuds utilisent les signaux GNSS (acronyme anglais pour *Global Navigation Satellite System*) pour calculer leur position, puis transmettent cette information à un équipement central de supervision par un lien de communications sans fil, comme par exemple un réseau cellulaire ou un réseau Wi-Fi. Cette méthode pose cependant de nombreux problèmes parmi lesquels celui de la fiabilité de la localisation GNSS à l'intérieur de bâtiments (environnement « indoor ») ou dans des environnements extérieurs (« outdoor ») contraints, comme par exemple les sites industriels, dans lesquels les satellites peuvent être masqués et les signaux soumis à de nombreux multitrajets.

A cet effet, sont également connues des méthodes de localisation indoor basées par exemple sur la position de bornes Wi-Fi, mais ces techniques sont peu robustes face aux environnements de propagation complexes (pertes d'informations, altération du signal, perte de précision, etc...) et consomment de l'énergie. De ce fait, les équipements doivent être reliés à des alimentations, ce qui rend la solution peu modulable, difficilement évolutive (tirage de câbles) et complexe à déployer (ingénierie radio complexe). Une solution connue précise et permettant d'utiliser des équipements peu consommateurs d'énergie repose sur l'utilisation de bornes réalisant des transmissions courte portée, comme par exemple des transmissions Bluetooth, et plus particulièrement la norme *Bluetooth Low Energy* (BLE), le protocole Z-Wave ou même, pour des portées plus réduites, les transmissions NFC (acronyme anglais de *Near Field Communications,* ou communications en champ proche) ou RFID (acronyme anglais de *Radio Frequency Identification*, ou identification Radio-Fréquence). De par leurs courtes portées, ces transmissions permettent de localiser très précisément un noeud, à l'échelle d'une ou deux pièces seulement. Les balises (en anglais *beacon*) utilisées pour la localisation courte-portée peuvent être disposées sans requérir d'infrastructure dédiée car elles peuvent opérer pendant plusieurs mois ou années sur batteries sans être rechargées. Cependant, la liaison avec l'équipement de supervision requiert le câblage (le plus souvent un lien Ethernet) de l'ensemble des balises dans l'environnement supervisé, ou l'ajout d'un deuxième lien sans fil avec les balises, tel qu'un lien Wi-Fi. Les liens Ethernet sont coûteux, peu évolutifs, et nécessitent des travaux de mise en place, tandis que les liens Wi-Fi sont consommateurs de batteries, réduisant ainsi la durée de vie des balises à quelques jours si elles ne sont pas alimentées électriquement et ne sont pas forcément adaptés aux environnements complexes cités précédemment (i.e. environnements confinés et hermétiques, environnements métalliques, etc.)

Pour répondre au problème de l'autonomie des balises réalisant la localisation des noeuds et l'échange de données avec l'équipement de supervision, le déposant a déposé la demande de brevet Européenne numéro EP 3.506.691 A1, où est décrit un système de localisation et d'échange de données bas débit avec pour fonction principale la localisation précise de noeuds, facilement déployable car peu consommateur d'énergie, sans ingénierie radio lourde (analyse du spectre), et offrant une flexibilité permettant de gérer une grande quantité de noeuds.

La figure 1 représente un mode de réalisation du système de localisation 100 de la demande EP 3.506.691 A1. Il comprend :
- un ou plusieurs noeuds 110 à 112,
- un équipement 101 centralisé de supervision de la position du ou des noeuds,
- une ou plusieurs balises 120 à 123, chaque balise étant configurée pour détecter les noeuds lorsqu'ils sont dans sa zone de couverture, et à émettre ou recevoir des informations en provenance ou à destination de la passerelle à laquelle la balise est rattachée pour le ou les noeuds en question, une fois l'identification réalisée (dialogue bidirectionnel de bout en bout),
- une ou plusieurs passerelles 130 à 132, chaque passerelle étant configurée pour retransmettre les données transmises par les balises à l'équipement de supervision 101. Les balises font le lien entre les noeuds et les passerelles.

Les noeuds et balises du système communiquent par des liens de communication courte-portée standardisés. On entend par « courte-portée » une portée telle qu'un noeud et une balise distants de quelques mètres à quelques dizaines de mètres puissent échanger des messages, éventuellement à travers une cloison. Le lien de communications courte-portée utilisé peut par exemple être le standard Bluetooth, dans n'importe quelle version de la norme, en particulier le standard *Bluetooth Low Energy*, ou tout autre standard de transmissions courte portée, comme par exemple le protocole Z-Wave, ou les standards NFC ou RFID. Ces liens de communications consomment peu d'énergie, permettant ainsi aux balises et noeuds de fonctionner de manière autonome sur batteries pendant plusieurs mois ou années.

Les noeuds 110 à 112 du réseau peuvent être utilisés en émission seulement, ou en émission/réception, ce qui leur permet d'échanger des informations comme par exemple des acquittements ou des informations de configuration avec les balises 120 à 123 du réseau. Lorsqu'un noeud apparait dans la zone de couverture d'une balise, il lui transmet son identifiant, éventuellement associé à d'autres informations, comme par exemple le niveau de ses batteries, ou toute autre information utile relevée par un capteur (température, pression, luminosité, humidité, fumée, etc...).

Chaque balise 120 à 123 est également configurée pour communiquer avec une passerelle 130 à 132 au travers de communications longue-portée standardisées. On entend par « longue-portée » une portée telle qu'une balise et une passerelle distants de plusieurs centaines de mètres puissent échanger des messages, éventuellement à l'intérieur de bâtiments, à travers des portes étanches ou des cloisons épaisses. Les balises et passerelle échangent des informations obtenues depuis les noeuds, des messages, des paramètres de configuration ou de synchronisation. Pour ceci, la passerelle et la balise utilisent des transmissions de type « *Low Power Wide Area Network* », ou LPWAN. Ces transmissions ont été définies pour répondre au besoin posé par l'internet des objets (en anglais *Internet of Things*, ou IoT), c'est-à-dire réaliser des transmissions faibles débits mais longue portée avec une faible consommation énergétique, ce qui permet aux balises de fonctionner sur batteries pendant plusieurs mois ou années.

II existe plusieurs standards de communications couverts par l'appellation LPWAN, les plus connus étant les protocoles Sigfox (protocole propriétaire déposé UNB - *Ultra Narrow Band*) et LoRaWAN (acronyme anglais de *Long Range Wide-Area Network*, ou réseau étendu à longue portée), mais qui couvre également de nombreux autres standards tels que NB-Fi (acronyme anglais de *Narrowband Fidelity*, de WAVIoT), Mioty (protocole de type Telegram Splitting Multiple Access - TSMA), Weightless, RPMA (acronyme anglais de *Random Phase Multiple Acces*, ou accès multiple à phase aléatoire), LTE-NB (version bande étroite du standard LTE, acronyme anglais de *Long Term Evolution*) ou LTE-M (version mobile du standard LTE). Les transmissions entre les balises et les passerelles peuvent indifféremment avoir lieu lorsqu'un noeud entre dans la zone de couverture d'une balise, à intervalles réguliers, ou sur requête de l'équipement de supervision 101.

Les passerelles 130 à 132 sont reliées à l'équipement de supervision 101 par un lien pouvant être un lien filaire, comme par exemple une liaison Ethernet ou fibre optique, ou par un lien sans fil, comme par exemple une liaison Wi-Fi ou une liaison s'appuyant sur un réseau cellulaire, permettant ainsi à l'équipement de supervision d'être déporté par rapport au site supervisé. Le lien sans fil peut également être un lien LPWAN lorsque le nombre d'équipements du réseau est limité. Les passerelles retransmettent à l'équipement de supervision les identifiants des noeuds et informations diverses collectés par les balises, ainsi que l'identifiant des balises associées. De cette manière, l'équipement de supervision établit une corrélation entre un noeud et une balise pour déterminer la position de chaque noeud du réseau.

L'utilisation de liens de communications LPWAN pour assurer les transmissions de messages entre passerelles et balises permet d'assurer une élongation importante du réseau, même lorsque les conditions de propagation sont mauvaises ou difficiles, avec une bonne capacité de pénétration dans les bâtiments et les zones confinées (sous-sols, coursives, etc.), et en garantissant une faible consommation et ainsi une autonomie pouvant aller jusqu'à plusieurs années, en particulier des balises qui peuvent alors être installées librement sans requérir une infrastructure dédiée.

Un défaut des liaisons LPWAN est qu'elles ne sont pas conçues pour transmettre de grandes quantités de données. De ce fait, les transmissions ne sont pas ordonnancées. Les collisions éventuelles de paquets sont gérées très simplement, par de simples mécanismes d'accès en contention. Elles ne permettent donc pas, en l'état, d'assurer la surveillance d'un réseau dense de noeuds et de balises puisque les paquets entrant en collision sont réémis, augmentant de ce fait le trafic et les probabilités de collisions. Pour résoudre ce problème, la demande de brevet EP 3.506.691 A1 décrit l'ajout d'une surcouche protocolaire aux transmissions LPWAN, afin d'organiser les émissions des balises de manière à éviter les collisions de paquets : les passerelles transmettent aux balises des informations concernant le multiplexage des transmissions que les balises prennent en compte pour émettre sur le lien LPWAN, évitant de ce fait les collisions de paquets et permettant de densifier le réseau.

La demande de brevet EP 3.506.691 A1 permet donc de mettre en oeuvre un système de localisation et d'échange de données évolutif et modulaire permettant de couvrir un réseau dense de balises et de noeuds. Cette solution présente cependant le défaut de ne pas être protégé contre les attaques de type cyber, en particulier sur la liaison courte portée qui ne garantit pas la sécurisation des flux. En particulier, le système entier pourrait être mis en défaut par des attaques de type « déni de service » (en anglais *Denial Of Service*, ou DoS), qui consistent à rendre inaccessible un serveur par l'envoi de multiples requêtes jusqu'à le saturer. D'autre part, les informations transmises par les noeuds transitent en clair jusqu'à l'équipement de supervision, et peuvent alors être interceptées par un tiers extérieur au réseau.

Un objet de l'invention est de fiabiliser et sécuriser les systèmes de localisation selon l'état de l'art face aux menaces de type cyber, en décrivant une balise IoT (sigle anglais pour *Internet of Things*, ou Internet des Objets) sécurisée pouvant être utilisée dans le cadre du système décrit dans la demande de brevet EP 3.506.691 A1, ou dans n'importe quel autre système utilisant des balises communicant d'une part avec des noeuds par une liaison courte portée et d'autre part avec des passerelles par une liaison LPWAN, comme par exemple décrit dans le brevet US 9.652.955 B1.

### Résumé de l'invention :

A cet effet, la présente invention décrit une balise sécurisée, pour un système de localisation et d'échange de données comprenant au moins un noeud, au moins une balise configurée pour détecter la présence et acquérir des données du ou des noeuds, et au moins une passerelle configurée pour récupérer des données acquises par la ou les balises et les retransmettre à un équipement de supervision. La balise sécurisée selon l'invention comprend :
- un premier moyen de communications configuré pour communiquer avec le ou les noeuds en utilisant un lien de communications courte-portée,
- un second moyen de communications configuré pour communiquer avec la ou les passerelles en utilisant un lien de communications de type Low Power - Wide Area Network (LPWAN).

La balise sécurisée selon l'invention comprend des moyens de calcul configurés pour mettre en oeuvre des fonctions de cryptage, d'authentification, d'intégrité et d'unicité des trames échangées avec le ou les noeuds.

Les fonctions de cryptage mettent en oeuvre une clé de cryptage associée aux liaisons courtes portées connue de l'ensemble des noeuds et balises du système.

Dans un mode de réalisation, la balise comprend un élément sécurisé dans lequel est stockée la clé de cryptage associée aux liaisons courte portée. La balise sécurisée est alors configurée pour utiliser ladite clé de cryptage pour déchiffrer au moins une partie des trames reçues des noeuds et chiffrer au moins une partie des trames transmises aux noeuds.

Dans un mode de réalisation, les trames échangées avec le ou les noeuds comprennent :
- un identifiant de l'émetteur,
- un marquant horaire,
- des données utiles chiffrées à l'aide d'une clé de cryptage dédiée au noeud,
- un motif d'intégrité de la trame.

L'identifiant de l'émetteur, le marquant horaire et le motif d'intégrité de la trame sont chiffrés à l'aide de la clé de cryptage associée aux liaisons courtes portées.

Avantageusement, les fonctions de cryptage, d'authentification, d'intégrité et d'unicité comprennent:
- le déchiffrage des trames à l'aide de la clé de cryptage associée aux liaisons courtes portées du système de localisation et d'échange de données,
- la comparaison de l'identifiant de l'émetteur avec une liste d'identifiants autorisés, et rejet des trames dont l'identifiant n'est pas compris dans la liste,
- la vérification du motif d'intégrité, et rejet des trames dont le motif d'intégrité n'est pas valide,
- la comparaison du marquant horaire avec des marquants horaires de trames reçues précédemment dans une période de temps donnée, et rejet des trames dont le marquant horaire permet de conclure qu'elles ont déjà été reçues du même équipement.

Selon un mode de réalisation de la balise sécurisée selon l'invention, les moyens de calculs sont en outre configurés pour mettre en oeuvre des fonctions de cryptage, d'authentification, d'intégrité et d'unicité des données échangées avec la ou les passerelles.

Selon un mode de réalisation de la balise sécurisée selon l'invention, le second moyen de communications est en outre configuré pour communiquer avec d'autres balises du système de localisation et d'échange de données en utilisant un lien de communications de type Low Power Wide Area Network, la balise sécurisée étant en outre configurée pour relayer des transmissions entre les autres balises et la ou les passerelles.

Avantageusement, le lien de communications courte-portée est un lien Bluetooth Low Energy.

Avantageusement, le lien de communications de type Low Power Wide Area Network est un lien LORA. Selon un mode de réalisation, le second moyen de communications est configuré pour transmettre en utilisant un lien de communications LORA dans la bande de fréquence ISM EU 868MHz ou ISM US 915MHz, la balise sécurisée comprenant en outre un troisième moyen de communications configuré pour transmettre en utilisant un lien de communications LORA dans la bande de fréquence ISM 2.45GHz, les moyens de calcul étant configurés pour choisir parmi le deuxième et le troisième moyen de communications en fonction des besoins en débit et/ou en portée des données échangées avec la ou les passerelles.

L'invention porte également sur un noeud sécurisé, pour un système de localisation et d'échange de données comprenant au moins un noeud, au moins une balise configurée pour détecter la présence et acquérir des informations du ou des noeuds, et au moins une passerelle configurée pour récupérer les informations acquises par la ou les balises et les retransmettre à un équipement de supervision. Le noeud sécurisé comprend un moyen de communications configuré pour communiquer avec la ou les balises en utilisant un lien de communications courte-portée. Il comprend également des moyens de calcul configurés pour mettre en oeuvre des fonctions de cryptage, d'authentification, d'intégrité et d'unicité des données échangées avec les balises.

Enfin, l'invention porte sur un système de localisation comprenant au moins un noeud, au moins une balise configurée pour détecter la présence et acquérir des informations du ou des noeuds, et au moins une passerelle configurée pour récupérer les informations acquises par la ou les balises et les retransmettre à un équipement de supervision, dans lequel au moins une des balises est une balise sécurisée selon l'invention, et au moins un des noeuds est un noeud sécurisé selon l'invention.

### Brève description des figures :

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :
- la figure 1 représente schématiquement un système de localisation selon l'état de l'art, dans lequel peut être mise en oeuvre une balise selon un mode de réalisation de l'invention ;
- la figure 2 décrit une balise IoT sécurisée selon un mode de réalisation de l'invention ;
- la figure 3a représente de manière schématique une transmission de données dans un mode de réalisation d'un système de localisation et d'échange de données selon l'invention ;
- la figure 3b représente de manière schématique une transmission de données dans un autre mode de réalisation d'un système de localisation et d'échange de données selon l'invention ;
- la figure 4a représente un exemple de trame utilisable sur la liaison courte portée pour les échanges entre noeuds et balises dans un système de localisation et d'échange de données selon l'invention ;
- la figure 4b représente un exemple de trame utilisable sur la liaison longue portée pour les échanges entre balises et passerelles dans un système de positionnement selon l'invention ;
- la figure 5 représente un mode de réalisation d'un système de localisation et d'échange de données selon l'invention, dans lequel les balises sont configurées pour relayer les transmissions.

Des références identiques peuvent être utilisées dans des figures différentes lorsqu'elles désignent des éléments identiques ou comparables.

### Description détaillée :

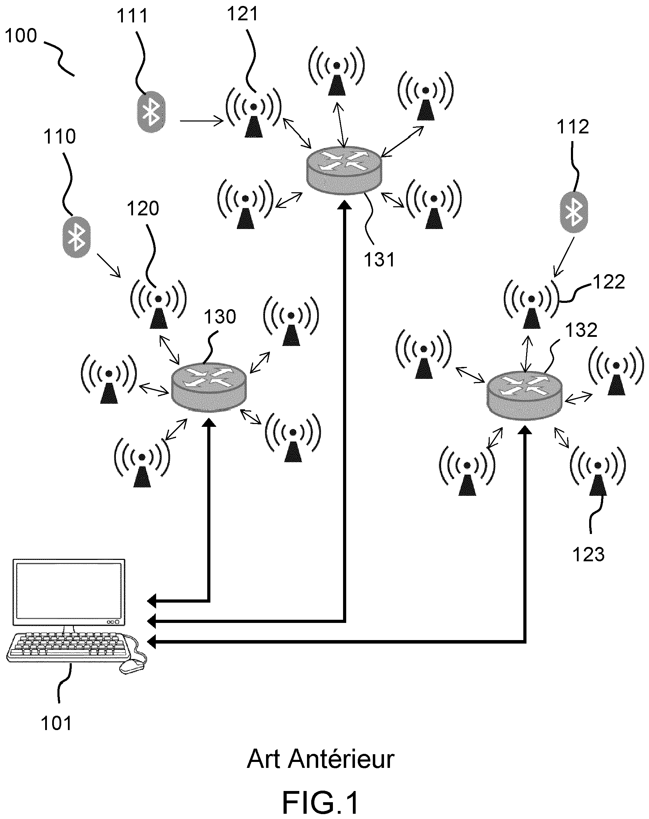

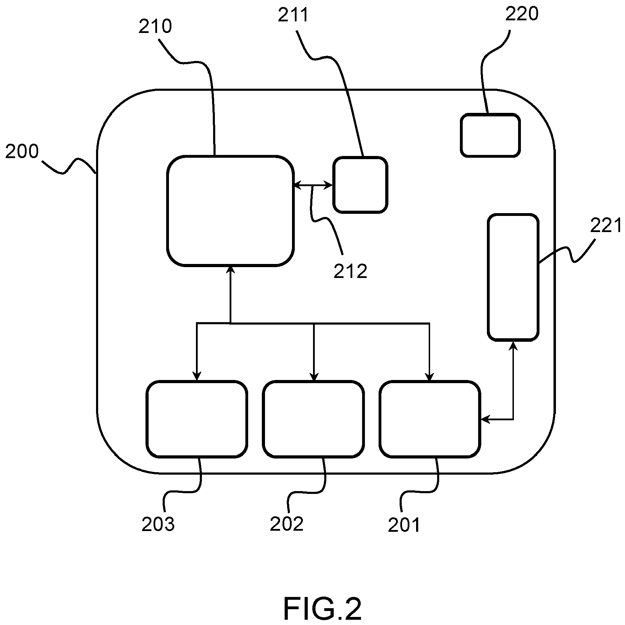

La figure 2 décrit une balise IoT sécurisée selon un mode de réalisation de l'invention. La balise sécurisée 200 est conçue pour être utilisée dans un système de localisation et d'échange de données comme par exemple celui de la figure 1, comprenant au moins un noeud (110, 111, 112), au moins une balise (120, 121, 122) configurée pour détecter et récupérer des informations du ou des noeuds et leur transmettre des informations, et pour les transmettre à au moins une passerelle (130, 131, 132) qui les relaye à un équipement de supervision 101, et recevoir des informations de la passerelle. L'équipement de supervision estime la position des noeuds à partir de la position des balises relayant le signal, géoréférencée lors du déploiement des balises sur le site. Avantageusement, cette position peut être affinée par une analyse du RSSI (sigle anglais pour *Received Signal Strength Indication*, ou indicateur de l'intensité du signal reçu) et/ou de « map matching ».

La balise sécurisée selon l'invention comprend :
- un premier moyen de communications 201 configuré pour communiquer avec le ou les noeuds en utilisant un lien de communications courte-portée, de type Bluetooth, Bluetooth Low Energy, Z-Wave, NFC, RFID ou autre,
- un second moyen de communications 202 configuré pour communiquer avec la ou les passerelles en utilisant un lien de communications de type Low Power Wide Area Network, par exemple de type LoRa, LoRa avec gestion des émissions tel que dans la demande EP 3.506.691 A1, LoRaWAN, Sigfox ou autre.

La balise sécurisée comprend également des moyens de calculs 210 configurés pour mettre en oeuvre des fonctions de cryptage, d'intégrité, d'authentification et d'unicité des données échangées avec le ou les noeuds. Ces fonctions permettent d'assurer la sécurité des transmissions de bout en bout dans le système, ainsi que sa sécurité contre les attaques de type cyber.

Les moyens de calculs peuvent par exemple être un microprocesseur, un DSP (sigle anglais pour *Digital Signal Processor*, ou processeur de signal numérique), un FPGA (sigle anglais pour *Field Programmable Gate Array*, ou réseau de portes programmable), un ASIC (acronyme anglais pour *Application-Specific Integrated Circuit*, ou circuit intégré propre à une application), n'importe quelle association de ces moyens, ou n'importe quel composant matériel permettant d'exécuter les fonctions précitées.

Dans la suite de la description, les fonctions de cryptage, d'authentification, d'intégrité et d'unicité des données échangées sont décrites en regard des échanges de données entre noeuds et balises. Selon différents modes de réalisation, ces fonctions peuvent être également appliquées aux données échangées entre les balises et les passerelles, et/ou entre les passerelles et l'équipement de supervision.

La fonction de cryptage consiste à chiffrer les données échangées entre les noeuds et les balises à l'aide de deux clés de cryptage différentes :
- une première clé de cryptage dédiée au noeud concerné, utilisée pour chiffrer les données utiles échangées. Cette clé de cryptage n'est connue que de l'équipement de supervision et du noeud concerné et
- une deuxième clé de cryptage associée aux liaisons courtes portées, connue de l'ensemble des noeuds et balises, utilisée pour chiffrer des données de signalisation échangées sur la liaison courte portée. Les données de signalisation comprennent l'identifiant de l'équipement émetteur, et des données permettant de garantir l'unicité et l'intégrité des trames de données échangées.

L'algorithme de cryptage utilisé peut être un algorithme à clés symétriques ou asymétriques, permettant d'empêcher qu'un tiers non autorisé ne puisse interpréter les données transmises. De nombreux algorithmes de cryptage sont connus et standardisés, par exemple les algorithmes AES (en anglais *Advanced Encryption Standard*), Blowfish, DES (en anglais *Data Encrytion Standard*), etc. L'algorithme de cryptage utilisé peut différer entre les deux couches de cryptage.

Une table de correspondance entre les identifiants des noeuds et les clés de cryptage dédiées associées à ces noeuds est entretenue par l'équipement de supervision.

Le mécanisme de cryptage décrit peut également être implémenté entre les balises et les passerelles et/ou entre les passerelles et l'équipement de supervision. Dans ce cas-là, des clés de cryptage associées respectivement aux liaisons entre balises, aux liaisons longues portées, et/ou aux liaisons entre passerelles et équipement de supervision, doivent être définies et communiquées aux équipements concernés par ces liaisons. Dans un mode de réalisation, cette clé est identique pour l'ensemble des équipements du réseau. En outre, ces équipements doivent être en possession d'une liste des identifiants des équipements autorisés sur le réseau afin de mettre en oeuvre le filtrage des identifiants des trames reçues.

La première clé de cryptage unique et spécifiquement dédiée à un noeud du système permet de chiffrer les données échangées avec l'équipement de supervision en garantissant leur protection sur l'ensemble de la transmission (de bout en bout). La deuxième clé de chiffrage, propre aux liaisons courtes portées à l'ensemble des noeuds du système, permet de protéger les données de signalisation échangées et de garantir la protection de la liaison courte portée face aux menaces potentielles (de type DoS par ex.), en filtrant les données transmises dans le système.

Les clés de cryptage peuvent être fixes et chargées lors de l'initialisation du dispositif, ou être renouvelables par l'équipement de supervision. Dans ce cas, la nouvelle clé de cryptage d'un dispositif est transmise chiffrée, soit par la clé associée aux liaisons courtes portées et connue de tous les noeuds, soit à l'aide d'une clé de cryptage utilisée uniquement pour la transmission de clés de cryptage, soit à l'aide de la clé spécifiquement dédiée au noeud concerné, la dernière solution étant celle garantissant le plus haut niveau de confidentialité.

Selon un mode de réalisation, la balise 200 comprend un élément sécurisé 211 configuré pour stocker la clé associée aux liaisons courtes portées. L'élément sécurisé peut être également utilisé pour stocker d'autres informations confidentielles, comme par exemple une clé de session unique utilisée pour établir une liaison de confiance entre le noeud et la balise, une clé utilisée pour crypter les clés de cryptages transmises dans le système, etc... Un élément sécurisé (en anglais *Secured Element*) est une puce spécifique réputée inviolable, capable d'accueillir en toute sécurité des applications et de stocker des données confidentielles. Les éléments sécurisés sont soumis à des règles et exigences de sécurité fixées par des autorités de confiance (par exemple Common Criteria V3.1, EAL (en anglais *Evaluation Assurance Level*), etc...).

L'élément sécurisé 211 et les moyens de calcul 210 communiquent par l'intermédiaire d'un lien 212, sur lequel les moyens de calcul sollicitent et récupèrent la clé de cryptage associée aux liaisons courtes portées lorsqu'ils chiffrent/déchiffrent les données échangées avec les noeuds. Une fois utilisées, la clé de cryptage est supprimée des moyens de calculs 201, de sorte qu'ils ne conservent aucune clé.

Avantageusement, la liaison 212 est enfouie sous une ou plusieurs couches de diélectrique dans le circuit imprimé, de manière à rendre la transmission de clés sur cette liaison robuste aux tentatives d'espionnage par analyse des données circulant sur les pistes (par exemple en utilisant une sonde).

Dans un autre mode de réalisation, le chiffrage/déchiffrage des trames est mis en oeuvre par l'élément sécurisé 211, de sorte que la clé de cryptage associée aux liaisons courtes portées ne sorte jamais en clair de l'élément sécurisé. Dans ce cas, les données à chiffrer/déchiffrer sont envoyées par les moyens de calcul 210 à l'élément sécurisé sur la liaison 212, et les données chiffrées/déchiffrées sont renvoyées sur cette même liaison.

La fonction d'authenticité permet d'assurer que les données reçues proviennent d'un équipement appartenant au système de localisation et d'échange de données. Les trames provenant d'équipements tiers sont rejetées, afin de protéger le système contre les attaques par déni de service. La fonction d'intégrité consiste à transmettre un motif permettant de s'assurer que les données échangées n'ont pas été altérées par une personne non autorisée. Ces deux fonctions sont imbriquées.

La fonction d'authenticité s'exécute en deux étapes :
- une première étape au cours de laquelle les moyens de calcul 210 analysent un identifiant transmis dans la signalisation chiffrée des trames échangées afin de s'assurer que l'émetteur appartient bien au système de localisation et d'échange de données. Cette analyse se fait en confrontant l'identifiant reçu avec une liste d'équipements autorisés , transmise par l'équipement de surveillance, mise à jour lors de l'introduction/suppression d'équipements dans le système et éventuellement stockée de manière sécurisée dans l'élément sécurisé 211. Les moyens de calcul sont configurés pour rejeter les trames transmises par des équipements n'appartenant pas au système ;
- une deuxième étape au cours de laquelle les moyens de calcul 210 vérifient l'intégrité des données utiles chiffrées échangées avec les noeuds en utilisant le motif d'intégrité. Cette étape garantit la provenance des messages puisque, le motif d'intégrité faisant partie de la signalisation transmise chiffré par la clé associée aux liaisons courtes portées, il ne peut être juste que si l'émetteur a connaissance de cette clé. Les moyens de calcul sont configurés pour rejeter les trames non intègres.

Le motif d'intégrité peut par exemple être un motif de contrôle de redondance cyclique (CRC, en anglais *Cyclic Redundancy Check*), un motif de Hash comme un motif SHA (en anglais *Secure Hash Algorithm*, ou algorithme de hachage sécurisé), ou tout autre motif permettant de garantir l'intégrité des données reçues.

La fonction d'intégrité a donc deux rôles distincts :
- son rôle conventionnel, qui consiste à identifier et supprimer les trames altérées, par exemple pour cause de mauvaise transmission,
- un rôle propre à l'invention, en lien avec la fonction d'authenticité, qui lui permet d'éviter les risques d'usurpation de l'identité de noeuds du réseau.

La fonction d'unicité comprend l'introduction, dans la signalisation transmise chiffrée par la clé associée aux liaisons courtes portées, d'un marquant horaire permettant d'identifier de manière unique la trame comme par exemple un instant d'émission de la trame ou une valeur incrémentée à chaque émission de trame. Elle permet de protéger le système contre le rejeu de trames, typique des attaques par déni de service. Les moyens de calcul 210 des balises 200 sont configurés pour mémoriser l'identifiant transmis non chiffré dans les trames reçues des noeuds, et le marquant associé. Ces éléments sont comparés à ceux des trames précédemment reçues. Les moyens de calcul 210 sont configurés pour rejeter les trames ayant déjà été reçues dans une période de temps donnée. Le marquant étant transmis dans la partie chiffrée des trames, il est protégé contre les modifications par les fonctions d'intégrité et d'authenticité.

La balise sécurisée selon l'invention peut être configurée pour retransmettre aux passerelles les identifiants et données acquises des noeuds dès qu'ils sont disponibles, comme dans le brevet US 9.652.955 B1, ou dans des créneaux temporels et fréquentiels définis par l'équipement de supervision, comme dans la demande de brevet EP 3.506.691 A1. Dans ce dernier cas, les données utiles reçues des différents noeuds peuvent être transmis concaténés à la passerelle, associés à des données de signalisation (motif d'intégrité, marquant horaire) communs, afin d'optimiser l'utilisation de la bande passante.

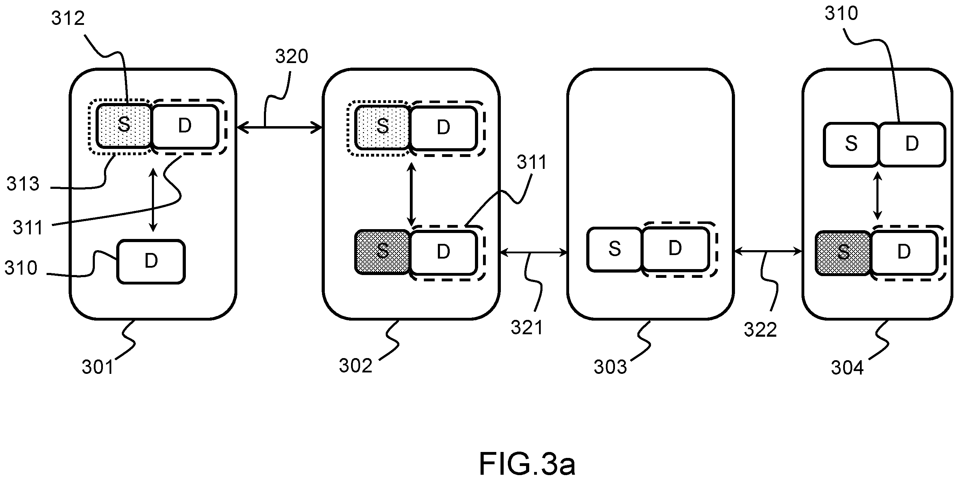

La figure 3a représente de manière schématique une transmission de données dans un mode de réalisation d'un système de localisation et d'échange de données selon l'invention comprenant un noeud 301, une balise 302, une passerelle 303 et un équipement de supervision 304. Dans ce mode de réalisation, les fonctions d'intégrité, authenticité et unicité sont mises en oeuvre uniquement sur la liaison courte-portée.

Dans le sens noeud vers équipement de supervision, les moyens de calcul du noeud 301 préparent un paquet à transmettre à l'équipement de supervision. Ce paquet comprend des données utiles, comme par exemple des données acquises de divers capteurs, des informations sur le niveau de batteries du noeud ou autres. Les données utiles 310 sont chiffrées à l'aide d'un algorithme de chiffrement utilisant la clé dédiée du noeud 301, connue de lui et de l'équipement de supervision seulement. Le paquet 311 correspond aux données utiles chiffrées par l'algorithme de cryptage utilisant la clé dédiée au noeud.

Des données de signalisation 312 sont ensuite concaténées au paquet de données chiffrées 311. Ces données de signalisation comprennent a minima un identifiant du noeud 301, et des données permettant de mettre en oeuvre les fonctions d'intégrité, d'authenticité et d'unicité décrites précédemment, à savoir au moins un motif d'intégrité et un marquant horaire. Le motif d'intégrité est calculé sur l'ensemble formé par les données de signalisation et les données utiles chiffrées.

Les données de signalisation sont chiffrées par un algorithme de cryptage utilisant la clé associée aux liaisons courtes portées, afin de former la trame313. De manière équivalente et non représentée, il est possible de chiffrer les données utiles chiffrées 311 par l'algorithme de cryptage utilisant la clé associée aux liaisons courtes portées.

Les données utiles et de signalisation chiffrées 311 et 313 sont transmises à la balise 302 par le lien courte portée 320, qui déchiffre les données de signalisation 312 à l'aide de la clé de cryptage associée aux liaisons courtes portées. Les données de signalisation sont ensuite analysées et filtrées :
- l'identifiant de la balise 301 est vérifié à l'aide de la liste des identifiants autorisés : les trames reçues d'équipements non autorisés sont rejetées,
- l'intégrité de la trame reçue est vérifiée à l'aide du motif d'intégrité : les trames non valides sont supprimées,
- le non rejeu du paquet est vérifié à l'aide du marquant horaire : les paquets déjà reçus du même équipement sont supprimés.

La signalisation est modifiée : les motifs d'horodatage et d'intégrité, destinés à protéger la liaison courte portée, sont supprimés, et l'identifiant de la balise 302 est ajouté. Avantageusement, l'ensemble formé par les données utiles chiffrées et l'identifiant du noeud peut être concaténé avec un ensemble équivalent de données provenant d'un autre noeud. Les identifiants du ou des noeuds 301, de la balise 302 et le ou les données utiles chiffrées 311 sont alors transmis à l'équipement de supervision 304 à travers la passerelle 303 et les liaisons 321 et 322. L'équipement de supervision détermine la position du noeud à partir des données de géoréférencement de la balise 302, et déchiffre les données utiles 311 à l'aide de la clé de cryptage dédiée au noeud 301, pour récupérer les données utiles 310 en clair.

Certains standards de liaisons longue portée 321 et de lien 322 comprennent des fonctionnalités permettant de sécuriser la transmission de données. C'est le cas, par exemple, du protocole LORA, qui permet la mise en oeuvre de fonctions de cryptage, d'intégrité et d'unicité du flux longue-portée. Dans un mode de réalisation, les moyens de calcul 210 et le moyen de communication LPWAN 202 sont configurés pour utiliser le protocole LORA dans un mode permettant la mise en oeuvre de fonctions de cryptage, intégrité, authenticité et unicité de ces standards, ce qui permet de sécuriser le système contre les attaques de type déni de service opérées au niveau des passerelles ou du serveur de supervision.

Les données utiles 310 sont donc transmises sur l'ensemble du réseau en étant protégées par les fonctions de cryptage. Les mécanismes d'intégrité, authenticité et unicité protègent la liaison courte portée 320 contre les risques cyber, en particulier les risques d'attaques par déni de service visant à saturer l'ensemble du système de localisation et d'échange de données, en filtrant les trames transmises dans le système.

Dans le sens inverse, et de manière similaire, les données transmises par l'équipement de surveillance 304 au noeud 301, comme par exemple une liste d'identifiants autorisés dans le système ou une clé de cryptage, sont :
- chiffrées par un algorithme de cryptage utilisant la clé de cryptage associée aux liaisons courtes portées,
- transmises à la balise 302 via la passerelle 303,
- associées à un identifiant de la balise 302 et des données de signalisation permettant la mise en oeuvre de fonctions d'intégrité, authenticité et unicité par le noeud 301,
- chiffrées en utilisant la clé de cryptage associée aux liaisons courtes portées, puis
- transmises au noeud 301 à travers la liaison courte portée 320.

Le noeud déchiffre les données reçues en utilisant la clé de cryptage associée aux liaisons courtes portées, vérifie l'intégrité, l'authenticité et l'unicité des données de manière à filtrer les trames non conformes, puis déchiffre les données transmises par l'équipement de surveillance en utilisant sa clé de cryptage dédiée.

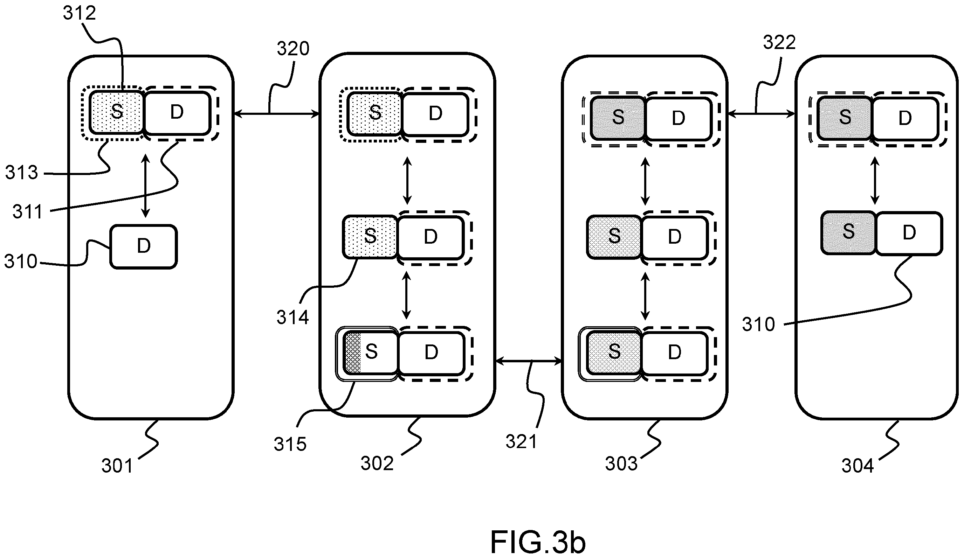

La figure 3b représente de manière schématique une transmission de données dans un autre mode de réalisation d'un système de localisation et d'échange de données selon l'invention. Dans ce mode de réalisation, les fonctions d'intégrité, authenticité et unicité permettant de filtrer les trames sont mises en oeuvre sur la liaison courte-portée (entre le noeud 301 et la balise 302), sur la liaison longue portée (entre la balise 302 et la passerelle 303) et entre la passerelle et l'équipement de supervision 304.

Tout comme sur la figure 3a, les données utiles 310 transmises par la balise sur la liaison courte portée 320 sont au préalable protégées par un chiffrage 313 utilisant la clé dédiée du noeud, et associées à des données de signalisation 312 comprenant l'identifiant du noeud 310, un marquant horaire et un motif d'intégrité. Les données de signalisation sont chiffrées 313 en utilisant la clé de cryptage associée aux liaisons courtes portées..

Les données de signalisation reçues par la balise sont déchiffrées en utilisant la clé de cryptage associée aux liaisons courtes portées, puis la balise met en oeuvre des fonctions de décryptage, vérification de l'intégrité, authenticité et unicité des trames 311 reçues, utilisant pour cela les données de signalisation transmises chiffrées, afin de filtrer les messages non autorisés.

Les données de signalisation sont modifiées : le marquant horaire et le motif d'intégrité sont supprimés. Avantageusement, les données utiles chiffrées et l'identifiant du noeud peuvent être concaténées avec des blocs de données utiles chiffrées et identifiants provenant d'autres noeuds du réseau. Une signalisation particulière 314 est ajoutée, comprenant un identifiant de la balise 302, un marquant horaire et un motif d'intégrité. Ces données de signalisation permettent à la passerelle recevant les trames de mettre en oeuvre des fonctions de cryptage, intégrité, authenticité et unicité pour filtrer les trames reçues et protéger le système contre les risques cyber. L'ensemble des données de signalisation est chiffré en utilisant la clé associée aux liaisons longues portées, connue des balises et passerelles.

Les données utiles chiffrées 311 et les données de signalisation chiffrées 315 sont transmis à la passerelle 303 sur la liaison longue portée 321. Celle-ci déchiffre les données de signalisation à l'aide de la clé associée aux liaisons longues portées, puis vérifie l'intégrité, l'authenticité et l'unicité des données déchiffrées pour filtrer les trames reçues.

Le même la liaison 321 entre la passerelle 303 et l'équipement de supervision 304 peut être protégée en modifiant les données de signalisation, en supprimant le marquant horaire et le motif d'intégrité de la liaison longue portée 321 pour en introduire de nouveaux propres à la liaison 322 entre passerelle et équipement de supervision, en y ajoutant l'identifiant de la passerelle 303, et en chiffrant l'ensemble des données de signalisation avec la clé de chiffrement associée à la liaison entre passerelles et équipement de supervision. L'ensemble est ensuite transmis à l'équipement de supervision qui déchiffre la signalisation, met en oeuvre des fonctions d'intégrité, authenticité et unicité pour filtrer les trames reçues, puis déchiffre les données utiles avec la clé de cryptage associé au noeud 301.

Les mêmes mécanismes peuvent être appliqués dans la direction inverse.

Contrairement au mode de réalisation de la figure 3a, ce mode de réalisation permet de mettre en oeuvre des fonctionnalités de cryptage, intégrité, authenticité et unicité des flux même lorsque le standard de communications employé n'offre pas ces fonctionnalités. En outre, ce mode de réalisation permet d'optimiser les tailles de trames (débit limité sur la liaison longue portée) par l'exploitation de méthode de chiffrement plus efficaces, plus performantes, intégrant nativement les fonctions d'intégrité, d'authenticité et de confidentialité.

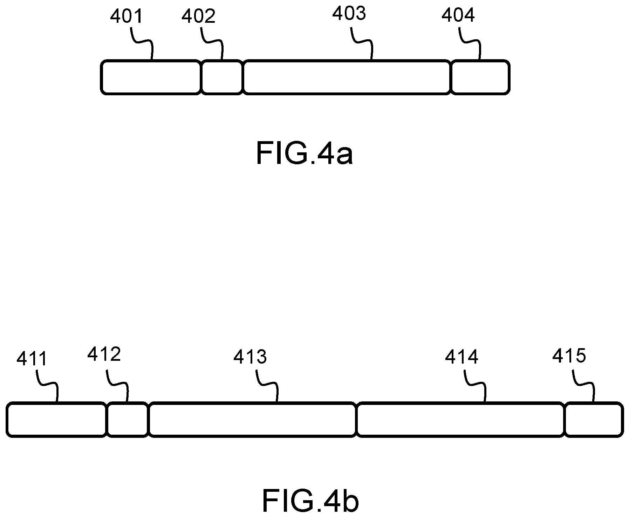

La figure 4a représente un exemple de trame utilisable sur la liaison courte portée pour les échanges entre noeuds et balises dans un système de localisation et d'échange de données selon l'invention, donnée à titre d'illustration uniquement. Ces formats de trames sont compatibles de certains standards de communications courte portée. C'est le cas par exemple des trames « BLE advertising » du standard BLE, dont le format peut être adapté aux besoins sans sortir du cadre du standard.

La trame transmise comprend les champs suivant :
- Un champ 401, comprenant l'identifiant de l'émetteur (balise ou noeud),
- Un champ 402, comprenant la référence de temps nécessaire pour la mise en oeuvre de la fonction d'unicité,
- Un champ 403 comprenant les données utiles à transmettre, issues par exemple des capteurs, et chiffrées à l'aide de la clé dédiée au noeud,
- Un champ 404 comprenant un motif d'intégrité (en anglais ICV pour *Integrity Check Value*), calculé sur les champs 401, 402 et 403.

Les champs 401, 402, 403 et 404 sont chiffrés à l'aide de la clé de cryptage associée aux liaisons courtes portées avant d'être envoyés.

La figure 4b représente un exemple de trame utilisable sur la liaison longue portée pour les échanges entre balises et passerelles dans un système de positionnement selon l'invention, donnée à titre d'illustration uniquement, et utilisant les principes décrits dans la demande de brevet 3.506.691 A1, où les transmissions sur la liaison longue-portée se font à des instants et dans des bandes de fréquence planifiées par l'équipement de supervision. Ces formats de trames sont compatibles des standards de transmissions longue-portée. C'est le cas par exemple des trames de type LoRa dont le format peut être adapté aux besoins sans sortir du cadre du standard.

La trame transmise comprend les champs suivant :
- Un champ 411, comprenant l'identifiant de l'émetteur (balise ou passerelle),
- Un champ 412, comprenant la référence de temps nécessaire pour la mise en oeuvre de la fonction d'unicité,
- Un champ 413 comprenant l'identifiant d'un noeud et les données utiles chiffrées associées,
- Un champ 414 comprenant l'identifiant d'un autre noeud et les données utiles associées,
- Un champ 415 comprenant un motif d'intégrité calculé sur les champs 411, 412, 413 et 414.

Les champs 411, 412, 413 et 414 sont chiffrés à l'aide de la clé de cryptage associée aux liaisons longues portées avant d'être envoyés.

Les figures 4a et 4b sont données à titre d'exemple seulement, le format de trame devant être adapté aux besoins opérationnels et aux exigences en termes de sécurité cyber.

Les fonctions de cryptage, authenticité, intégrité et unicité mises en oeuvre sur les liaisons courte portée entre les noeuds (110, 111, 112) et les balises (120, 121, 122), et éventuellement sur la liaison longue portée entre les balises et les passerelles (130, 131, 132) et/ou la liaison entre les passerelles et l'équipement de supervision (101), permettent de protéger le système contre les attaques de type cyber (espionnage, entrave au fonctionnement, officine, etc...). Les noeuds du réseau doivent donc également comprendre des moyens de calcul leur permettant de mettre en oeuvre des fonctions de cryptage, d'authenticité, d'intégrité et d'unicité et d'intégrer les données de signalisation nécessaire à la mise en oeuvre de ces fonctions par les balises, à savoir :
- des moyens de mémorisation d'une clé de cryptage propre au noeud et d'une clé de cryptage associée aux liaisons courtes portées et d'une liste des identifiants des équipements du système, avantageusement dans un élément sécurisé pouvant être relié à des moyens de calcul par une liaison sécurisée,
- des moyens de calcul configurés pour :
   ∘ chiffrer/déchiffrer les données utiles transmises à l'aide de la clé de cryptage dédiée au noeud,
   ∘ insérer des données de signalisation comprenant au moins un identifiant du noeud, un marquant horaire permettant d'identifier la trame dans les données transmises aux balises IoT sécurisées selon l'invention, et un motif d'intégrité,
   ∘ chiffrer/déchiffrer l'ensemble données utiles chiffrées et signalisation à l'aide de la clé de cryptage associée aux liaisons courtes portées,
   ∘ vérifier l'intégrité et l'authenticité et l'unicité des trames reçues depuis des balises IoT sécurisées selon l'invention.

La balise IoT sécurisée selon l'invention peut également comprendre d'autres fonctionnalités avantageuses décrites ci-dessous, mises en oeuvre séparément ou ensemble.

Dans un mode de réalisation, la balise sécurisée 200 comprend des moyens 202 de communication LPWAN bas débit et des moyens 203 de communication LPWAN haut débit.

Les moyens 202 de communication bas débit sont typiquement des moyens de communication LPWAN dans la bande de fréquence ISM EU 868 MHz (allant de 863 MHz à 870 MHz) ou dans la bande de fréquence ISM US 915 MHz (allant de 902 MHz à 928 MHz). Ce mode bas débit garantit une bonne portée et un bon franchissement des obstacles, en particulier en intérieur.

Les moyens 203 de communication haut débit sont typiquement des moyens de communication LPWAN dans une bande de fréquence ISM 2.45 GHz (allant de 2.4 GHz à 2.5 GHz). Ce mode haut débit permet de faire transiter par exemple des flux audio ou vidéo, des mises à jour des tables de clés cryptographiques, ou des firmwares/middlewares, avec une portée réduite par rapport aux moyens de communication bas débit.

Les moyens de calcul 200 sont configurés pour choisir et utiliser les capacités radio haut débit 202 ou les capacités radio bas débit 203 de la balise sécurisée 200. Le choix entre le mode haut débit et le mode bas débit peut être réalisé en fonction des débits ou services souhaités, des conditions de propagation, des pertes de paquets, de la portée requise, de la puissance d'émission et/ou de la configuration de la forme d'onde (facteur étalement, modulation, etc...).

L'utilisation de moyens de communication séparés pour les transmissions courte portée (201), LPWAN bas débit (202) et LPWAN haut débit (203) permet de pouvoir les utiliser en parallèle et de manière non synchrone et sur des bandes de fréquences différentes.

Dans un mode de réalisation, les noeuds disposent d'un moyen de communication longue portée, identique à celui utilisé entre les passerelles et les balises. Les balises selon l'invention et les noeuds sont alors configurés pour communiquer en utilisant ce lien de communications longue portée à travers leurs moyens de communication longue portée (202 et 203). Il n'est pas possible de localiser les noeuds à l'aide du lien de communications longue portée, mais ce mode de réalisation permet d'échanger des données avec des noeuds qui ne sont pas à portée des balises par le lien de communications courte portée 201, comme par exemple des clés de cryptage, des fichiers d'identifiants ou des messages d'alertes.

Dans un autre mode de réalisation, la balise 200 peut comprendre un ou plusieurs éléments 220 comme par exemple :
- un senseur inertiel configuré pour lever une alarme en cas de mouvement de la balise et/ou un détecteur d'ouverture du boitier de la balise, afin de notifier immédiatement l'équipement de supervision de tentatives de déplacement ou de modification de la balise, et de garantir ainsi son intégrité,
- un capteur de température et/ou d'hygrométrie, configuré pour remonter à l'équipement de supervision des informations sur l'environnement de la balise,
- un calculateur d'état de charge des batteries.

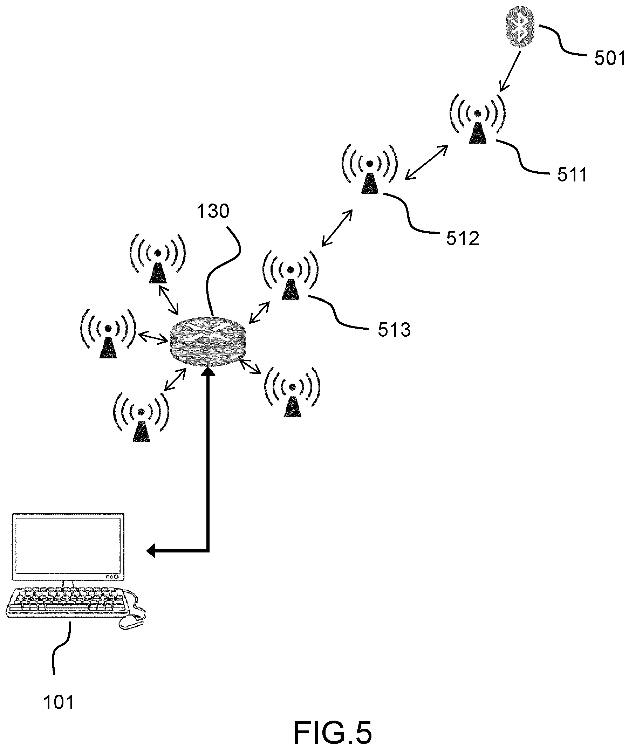

Dans un autre mode de réalisation, les balises sont configurées pour relayer les données transmises par d'autres balises à travers leurs moyens de communication 202 ou 203 utilisant un lien de communications de type Low Power - Wide Area Network. Ce mode de réalisation permet au système de localisation d'adopter une topologie en réseau maillé (en anglais *Mesh*). La figure 5 illustre le fonctionnement en topologie Mesh, où les informations acquises par la balise 511 à propos du noeud 501 sont relayées d'abord à la balise 512, puis à la balise 513 afin de parvenir à la passerelle 130 et à l'équipement de supervision 101. Ce mode de réalisation permet de réduire le nombre de passerelles du réseau, et donc de faciliter encore sa mise en oeuvre.

Dans un mode de réalisation, la balise sécurisée 200 selon l'invention comprend une seule antenne, omnidirectionnelle ou non, par laquelle sont réalisées les communications courte portée. Dans un autre mode de réalisation, la balise sécurisée 200 selon l'invention comprend une pluralité d'antennes directives 221, et est configurée pour mettre en oeuvre des traitements de goniométrie ou de formation de faisceaux sur les signaux émis/reçus sur les deux antennes. De cette manière, la balise peut être configurée pour orienter les antennes dans une direction voulue, pour balayer une surface ou pour déterminer la direction des noeuds.

De manière équivalente, la balise sécurisée selon l'invention comprend au moins une antenne par laquelle sont réalisées les communications LPWAN, l'utilisation d'une antenne directive ou de plusieurs antennes permettant d'obtenir un gain supplémentaire utile pour augmenter la portée des transmissions, en particulier à l'intérieur de bâtiments.

L'invention porte donc sur une balise sécurisée 200 comprenant des moyens permettant la mise en oeuvre de fonctions de cryptage, d'intégrité, d'authenticité et d'unicité sur les transmissions réalisées avec les noeuds par la liaison courte portée, afin de répondre au besoin de protection contre les risques de type cyber tels que les attaques par déni de service (dont la balise est protégée par la fonction d'unicité), l'interception des données (dont la balise est protégée par la fonction de cryptage), ou le phishing (dont la balise est protégée par la fonction d'authentification). Pour cela, les balises utilisent une clé de cryptage associée aux liaisons courtes portées pour chiffrer/déchiffrer des données de signalisation permettant la mise en oeuvre des fonctions précitées, dans le but de filtrer les trames provenant d'équipements non autorisés ou d'équipements essayant de saturer le réseau. Les mêmes protections peuvent être mises en oeuvre sur la liaison longue portée. La balise selon l'invention est modulaire, et peut comprendre diverses fonctionnalités additionnelles, comme par exemple un élément sécurisé permettant de stocker une clé de cryptage, des moyens de transmission LPWAN dans des bandes de fréquences différentes, divers capteurs destinés à garantir la sécurité de la balise, des antennes directives, etc...

Elle conserve sa simplicité de mise en oeuvre puisqu'elle s'appuie toujours sur des liaisons de données faible consommation lui permettant de fonctionner sur batteries, et est paramétrable à distance par l'équipement de supervision. En outre, la sécurisation proposée consiste à modifier les données transmises sur la liaison courte portée (et éventuellement les autres liaisons), sans sortir des standards de communication existant, ce qui rend possible l'utilisation de produits disponibles dans le commerce (en anglais COTS pour *Commercial Off-the-shelf*), afin de limiter les coûts de développement, et de permettre d'intégrer dans le réseau des équipements tiers non sécurisés.

L'invention porte également sur un noeud configuré pour échanger avec la balise sécurisée, c'est-à-dire un noeud intégrant des moyens d'injection et de stockage d'une clé de cryptage associée aux liaisons courtes portées et d'une clé de cryptage dédiée, des fonctions de cryptage/décryptage, configuré pour introduire dans les trames émises les champs nécessaires pour mettre en oeuvre les fonctions d'authenticité, intégrité et unicité décrites précédemment, et configuré pour mettre en oeuvre ces fonctions sur les trames reçues. Tout comme la balise, le noeud peut par exemple comprendre un élément sécurisé lui permettant de stocker les clés de cryptage en toute sécurité.

L'invention porte enfin sur un système de localisation dans son ensemble, comprenant un ou plusieurs noeuds sécurisés selon l'invention, configurés pour communiquer avec une ou plusieurs balises sécurisées selon l'invention à travers un lien de communications courte portée, une ou plusieurs passerelles configurées pour communiquer avec la ou les balises à travers un lien de communications de type LPWAN, et un équipement de supervision relié aux passerelles par un lien de communications filaire ou non. L'équipement de supervision récupère les informations concernant la position des noeuds du réseau, et est en mesure de configurer les divers équipements du réseau, par exemple les clés de cryptages ou les ressources temporelles utilisées par les balises sur les liens de communication LPWAN. L'équipement de supervision a connaissance des clés de cryptage dédiées associées aux noeuds du système, ce qui permet de chiffrer de bout en bout les données échangées sur le système, sans que les équipements relayant les données ne soient en mesure de prendre connaissance de leur contenu, ce qui garantit la confidentialité de ces données. Avantageusement, les liaisons entre les balises et les passerelles, ainsi que les liaisons entre les passerelles et l'équipement de supervision, peuvent également être protégées par des fonctions de cryptage, intégrité, authenticité et/ou unicité.

## Revendications

1. Balise sécurisée (200), pour un système de localisation et d'échange de données comprenant au moins un noeud (110, 111, 112), au moins une balise (120, 121, 122) configurée pour détecter la présence et acquérir des données du ou des noeuds, et au moins une passerelle (130, 131, 132) configurée pour récupérer des données acquises par la ou les balises et les retransmettre à un équipement de supervision (101), ladite balise sécurisée comprenant :
- un premier moyen de communications (201) configuré pour communiquer avec le ou les noeuds en utilisant un lien de communications courte-portée,
- un second moyen de communications (202) configuré pour communiquer avec la ou les passerelles en utilisant un lien de communications de type Low Power - Wide Area Network (LPWAN),
ladite balise sécurisée étant **caractérisée en ce qu'**elle comprend des moyens de calcul (210) configurés pour mettre en oeuvre des fonctions de cryptage, d'authentification, d'intégrité et d'unicité des trames échangées avec le ou les noeuds.

2. Balise sécurisée selon la revendication 1, dans laquelle les fonctions de cryptage mettent en oeuvre une clé de cryptage associée aux liaisons courtes portées connue de l'ensemble des noeuds et balises du système.

3. Balise sécurisée selon la revendication 2, comprenant en outre un élément sécurisé (211) dans lequel est stockée la clé de cryptage associée aux liaisons courte portée, la balise sécurisée étant configurée pour utiliser ladite clé de cryptage pour déchiffrer au moins une partie de trames reçues des noeuds et chiffrer au moins une partie de trames transmises aux noeuds.

4. Balise sécurisée selon l'une des revendications 2 et 3, dans laquelle les trames échangées avec le ou les noeuds comprennent :
- un identifiant de l'émetteur (401),
- un marquant horaire (402),
- des données utiles chiffrées à l'aide d'une clé de cryptage dédiée au noeud (403), ladite clé de cryptage dédiée étant connue du noeud et de l'équipement de supervision seulement,
- un motif d'intégrité de la trame (404),
et où l'identifiant de l'émetteur, le marquant horaire et le motif d'intégrité de la trame sont chiffrés à l'aide de la clé de cryptage associée aux liaisons courtes portées.

5. Balise sécurisée selon la revendication précédente, dans laquelle les fonctions de cryptage, d'authentification, d'intégrité et d'unicité comprennent :
- le déchiffrage des trames à l'aide de la clé de cryptage associée aux liaisons courtes portées du système de localisation et d'échange de données,
- la comparaison de l'identifiant de l'émetteur avec une liste d'identifiants autorisés, et rejet des trames dont l'identifiant n'est pas compris dans la liste,
- la vérification du motif d'intégrité, et rejet des trames dont le motif d'intégrité n'est pas valide,
- la comparaison du marquant horaire avec des marquants horaires de trames reçues précédemment dans une période de temps donnée, et rejet des trames dont le marquant horaire permet de conclure qu'elles ont déjà été reçues du même équipement.

6. Balise sécurisée selon l'une des revendications précédentes, dans laquelle les moyens de calculs (210) sont en outre configurés pour mettre en oeuvre des fonctions de cryptage, d'authentification, d'intégrité et d'unicité des données échangées avec la ou les passerelles.

7. Balise sécurisée selon l'une des revendications précédentes, dans laquelle le second moyen de communications (202) est en outre configuré pour communiquer avec d'autres balises du système de localisation et d'échange de données en utilisant un lien de communications de type Low Power Wide Area Network, la balise sécurisée (511, 512, 513) étant en outre configurée pour relayer des transmissions entre les autres balises et la ou les passerelles (130).

8. Balise sécurisée selon l'une des revendications précédentes, dans laquelle le lien de communications courte-portée est un lien Bluetooth Low Energy.

9. Balise sécurisée selon l'une des revendications précédentes, dans laquelle le lien de communications de type Low Power Wide Area Network est un lien LORA.

10. Balise sécurisée selon la revendication 9, dans laquelle le second moyen de communications (202) est configuré pour transmettre en utilisant un lien de communications LORA dans la bande de fréquence ISM EU 868MHz ou ISM US 915MHz, la balise sécurisée comprenant en outre un troisième moyen de communications (203) configuré pour transmettre en utilisant un lien de communications LORA dans la bande de fréquence ISM 2.45GHz, les moyens de calcul (210) étant configurés pour choisir parmi le deuxième et le troisième moyen de communications en fonction des besoins en débit et/ou en portée des données échangées avec la ou les passerelles.

11. Noeud sécurisé, pour un système de localisation et d'échange de données comprenant au moins un noeud (110, 111, 112), au moins une balise (120, 121, 122) configurée pour détecter la présence et acquérir des informations du ou des noeuds, et au moins une passerelle (130, 131, 132) configurée pour récupérer les informations acquises par la ou les balises et les retransmettre à un équipement de supervision (101), ledit noeud sécurisé comprenant un moyen de communications configuré pour communiquer avec la ou les balises en utilisant un lien de communications courte-portée, **caractérisé en ce que** le noeud sécurisé comprend des moyens de calcul configurés pour mettre en oeuvre des fonctions de cryptage, d'authentification, d'intégrité et d'unicité des données échangées avec les balises.

12. Système de localisation comprenant au moins un noeud (110, 111, 112), au moins une balise (120, 121, 122) configurée pour détecter la présence et acquérir des informations du ou des noeuds, et au moins une passerelle (130, 131, 132) configurée pour récupérer les informations acquises par la ou les balises et les retransmettre à un équipement de supervision (101), dans lequel au moins une des balises est une balise sécurisée (200) selon l'une des revendications 1 à 10, et au moins un des noeuds est un noeud sécurisé selon la revendication 11.
